# EUROPÄISCHE PATENTSCHRIFT

(11) **EP 2 697 140 B1**
(45) Veröffentlichungstag und Bekanntmachung des Hinweises auf die Patenterteilung: **17.09.2014**
(21) Anmeldenummer: 11725312.0
(22) Anmeldetag: 14.04.2011
(51) Int. Cl.: B65G 15/02

(54) **KURVENGURTFÖRDERER UND HALTEELEMENT MIT ROLLEN FÜR EINEN KURVENGURTFÖRDERER**
CURVED BELT CONVEYOR AND FASTENING ELEMENT WITH ROLLS FOR THIS CONVEYOR
CONVOYEUR A BANDE COURBEE ET ELEMENT DE RETENUE A ROULEAUX POUR LEDIT CONVOYEUR

(43) Veröffentlichungstag der Anmeldung: 19.02.2014
(73) Patentinhaber: TRANSNORM SYSTEM GmbH, 31177 Harsum (DE)
(72) Erfinder: VENTZ, Kai, 31139 Hildesheim (DE); SCHÄLLIG, Rene, 31134 Hildesheim (DE)
(74) Vertreter: Siekmann, Gunnar
(86) Internationale Anmeldenummer: PCT/DE2011/000410
(87) Internationale Veröffentlichungsnummer: WO 2012/139538

(56) Entgegenhaltungen:
- EP-A1- 1 688 373
- EP-B1- 0 699 166
- DE-A1- 3 826 953
- DE-U1- 9 300 876
- DE-U1- 29 502 064
- US-A- 5 682 975

## Beschreibung

Die Erfindung betrifft einen Kurvengurtförderer mit einem Fördergurt, der im Bereich der den Außenrand bildenden Kante ein Angriffselement aufweist, das von mehreren paarweise angeordneten Rollen geführt wird, wobei jedes Rollenpaar auf einem Halteelement angeordnet ist. Weiterhin betrifft die Erfindung ein Halteelement mit einem darauf angeordneten Rollenpaar zur Verwendung in einem solchen Kurvengurtförderer.

Ein gattungsgemäßer Kurvengurtförderer ist in der DE 10 2006 024 535 B4 bzw. der EP 2 027 044 A1 beschrieben. Im Bereich des Außenradius sind eine Vielzahl von Rollenpaaren angeordnet, die den Fördergurt an einer wulstartigen Kante in Eingriff nehmen und dadurch führen. Dabei sind in vertikaler Hinsicht jeweils vier Rollen übereinander an einem Halteelement angeordnet, wobei das obere Rollenpaar den obertrumigen Teil des Fördergurtes und das untere Rollenpaar den untertrumigen Teil des Fördergurtes führen. Auf dem Halteelement sind die Rollen mit ihrer Drehachse über einen Hebel exzentrisch, d.h. parallel und beabstandet, zur Drehachse des Schwenkelements gelagert und verschwenkbar.

Eine andere Lösung ist beispielsweise aus der EP 2 275 365 A1 bekannt, bei der die äußeren Rollen der Rollenpaare an C-förmigen Bügeln angeordnet sind, die nach außen wegschwenkbar sind.

Der Erfindung liegt die Aufgabe zu Grunde einen Kurvengurtförderer der eingangs genannten Art zu schaffen, der insbesondere im Bereich der Führungsrollen besonders einfach und stabil aufgebaut ist.

Die Lösung dieser Aufgabe erfolgt mit einem Kurvengurtförderer mit den Merkmalen des Patentanspruchs 1. Vorteilhafte Weiterbildungen der Erfindung sind in den Unteransprüchen beschrieben.

Bei einem Kurvengurtförderer mit einem Fördergurt, der im Bereich der den Außenrand bildenden Kante ein Angriffselement aufweist, das von mehreren paarweise angeordneten Rollen geführt wird, wobei jedes Paar der Rollen auf einem Halteelement angeordnet ist, ist erfindungswesentlich vorgesehen, dass das Halteelement als U-Profil mit einem Boden und zwei Schenkeln ausgebildet ist und dass die Rollen über zugeordnete Rollenhalter an den gegenüberliegenden Schenkeln des U-Profils befestigt sind. Dadurch entsteht ein sehr einfach und zugleich sehr stabil konstruiertes Halteelement. Das Halteelement ist auch in sich stabil und kann ohne weiteres an anderen Elementen wie einem äußeren Rahmen des Kurvengurtförderers montiert werden, wobei dann die anderen Elemente nicht mehr die Gesamtstabilität zur Aufnahme der Rollen aufbringen müssen, da dies durch das U-Profil erreicht wird.

Bevorzugt ist jede Rolle auf einem Rollenhalter gelagert und jeder Rollenhalter ist an den Schenkeln des U-Profils befestigt. Der Rollenhalter ist dabei auf beiden Seiten des U-Profils, also an beiden sich gegenüberliegenden Schenkeln des U-Profils und dabei bevorzugt auf den innenliegenden Seiten der Schenkel des U-Profils befestigt. Der Abstand der Schenkel des U-Profils entspricht dabei bevorzugt im wesentlichen etwa dem Durchmesser der Rollen bzw. ist etwas größer ausgebildet. Die Rollen sind dann durch den zwischen den Schenkeln angeordneten Rollenhalter etwas oberhalb der Schenkel angeordnet, können aber zwischen die Schenkel verschwenkt werden. Insgesamt ergibt sich auf diese Weise eine sehr hohe Stabilität.

In einer bevorzugten Ausgestaltung der Erfindung ist die Drehachse mindestens einer Rolle von zwei paarweise angeordneten Rollen in einer Ebene verschwenkbar, die parallel zwischen den Schenkeln des U-Profils liegt. Dadurch kann mindestens eine Rolle eines Rollenpaars vom Fördergurt weg und zum Fördergurt hin bewegt werden. Der zwischen den Rollen mit dem Angriffselement eingespannte Fördergurt kann dann leicht entnommen und gegebenenfalls erneuert werden. Eine Wartung des erfindungsgemäßen Kurvengurtförderers ist dadurch sehr leicht möglich. Dazu weist der Rollenhalter für mindestens eine Rolle an jedem Schenkel zwei Befestigungspunkte auf, wobei der Befestigungspunkt, der dem Fördergurt zugewandt ist, eine Drehbewegung um diesen Befestigungspunkt ermöglicht und der Befestigungspunkt, der vom Fördergurt abgewandt ist, zwischen zwei Positionen so verstellbar ist, dass in einer Position die Rolle am Fördergurt anliegt und in einer anderen Position die Rolle den Fördergurt freigibt. Die Rolle wird dabei in einer Ebene geschwenkt, in der auch die Drehachse der Rolle liegt. Der gesamte Rollenhalter wird dabei zwischen die Schenkel des U-Profils verschwenkt. Der Abstand der Schenkel zueinander ist so groß, dass die Rolle ebenfalls zwischen die Schenkel schwenkbar ist.

Um eine solche Schwenkbarkeit zu realisieren, ist der Rollenhalter bevorzugt mechanisch verformbar, so dass ein Befestigungspunkt des Rollenhalters reversibel lösbar ist. Günstigerweise ist dabei der vom Fördergurt abgewandte Befestigungspunkt reversibel lösbar. Ein Befestigungspunkt ist bevorzugt durch korrespondierende Rastelemente an einem Betätigungshebel des Rollenhalters und dem zugeordnetem Schenkel des U-Profils ausgebildet. In einer Ausgestaltung weist der Betätigungshebel eine Rastnase auf, die innenseitig in eine von mehreren Rastausnehmungen im Schenkel des U-Profils reversibel fixierbar ist. Denkbar ist auch eine umgekehrte Ausbildung, bei der eine Rastausnehmung im Betätigungshebel vorgesehen ist, die auf eine von mehreren vorstehenden Rastnasen an den Schenkeln aufgeschoben wird. In den Schenkeln des U-Profils sind bevorzugt zwei Rastelemente, insbesondere Rastausnehmungen vorgesehen, so dass die Rolle in einer ersten Position fixierbar ist, in der diese den Fördergurt bzw. das Angriffselement, insbesondere einen wulstförmigen Rand, in Eingriff nimmt und in einer zweiten Position fixierbar ist, in der die Rolle den Fördergurt freigibt, so dass dieser entnommen bzw. ausgetauscht werden kann. Der Rollenhalter ist günstigerweise im Bereich des dem Fördergurt zugewandten Befestigungspunktes und der Aufnahme der Rolle starr ausgebildet und ist demgegenüber im Bereich des vom Fördergurt abgewandten Befestigungspunktes, insbesondere im Bereich des Betätigungshebels weniger starr ausgebildet. Bevorzugt ist der Rollenhalter aus Kunststoff, insbesondere als Spritzgussteil ausgebildet, wobei die einzelnen Wandabschnitte des Spritzgussteils so stark ausgebildet sind, dass der Rollenhalter eine ausreichende Stabilität zur Aufnahme und Lagerung der Rolle aufweist. Im Bereich der Betätigungshebel ist die Wand jedoch mit einer Schwächung oder Verjüngung ausgebildet, so dass die Betätigungshebel bewegbar sind, insbesondere zwischen den Schenkeln des U-Profils nach innen gedrückt werden können, so dass die nach außen vorstehenden Rastnasen aus den Rastausnehmungen in den Schenkeln herausdrückbar sind.

In einer anderen bevorzugten Ausgestaltung der Schenkel weisen die Schenkel des U-Profils zwischen zwei ein Rollenpaar bildenden Rollen eine Ausnehmung auf. In dieser Ausnehmung kann der Fördergurt und insbesondere das Angriffselement an der äußeren Kante des Fördergurts zwischen den ein Rollenpaar bildenden Rollen hindurchgeführt werden ohne mit den Schenkeln des U-Profils zu kollidieren. In einer bevorzugten Ausgestaltung der Erfindung sind auf einem einstückig ausgebildeten U-Profil vier Rollen angeordnet, wobei zwei Rollen ein Rollenpaar für die obertrumige Seite des Fördergurtes und zwei Rollen ein Rollenpaar für die untertrumige Seite des Fördergurtes bilden. Jedes U-Profil ist dabei zur vertikalen Anordnung an dem Kurvengurtförderer, insbesondere einem Seitenwandprofil vorgesehen. Bevorzugt sind im Boden des U-Profils Ausnehmungen vorgesehen, durch die eine Verbindung des U-Profils mit dem Seitenwandprofil über Schrauben und Klemmsteine möglich ist. Bevorzugt weisen die Schenkel des U-Profils im Bereich zwischen den Rollenpaaren eine weitere Ausnehmung auf. Diese Ausnehmung ist so dimensioniert, dass die Betätigungshebel der Rollenhalter in dieser Ausnehmung hin und her bewegt werden können, so dass die Verschwenkbarkeit auch der mittleren Rollen der vier auf dem Halteelement angeordneten Rollen gegeben ist.

Ein weiterer Aspekt der Erfindung besteht in der Bereitstellung eines Halteelements für einen Kurvengurtförderer der oben genannten Gattung, auf dem wenigstens zwei ein Rollenpaar bildende Rollen angeordnet sind, wobei das Halteelement als U-Profil mit einem Boden und zwei Schenkeln ausgebildet ist und die Rollen an den gegenüberliegenden Schenkeln des U-Profils befestigt sind. Hinsichtlich der weiteren Ausgestaltung eines solchen Halteelements wird auf die oben gegebene Beschreibung des Kurvengurtförderers verwiesen, bei dem ebenfalls dieses Halteelement ausführlich diskutiert wurde.

Nachfolgend wird die Erfindung anhand eines in der Zeichnung dargestellten Ausführungsbeispiels weiter erläutert. Im Einzelnen zeigen die schematischen Darstellungen in:
- Fig. 1:: eine schematische Ansicht eines Kurvengurtförderers;
- Fig. 2:: eine perspektivische Ansicht eines Halteelements des erfindungsgemäßen Kurvengurtförderers montiert in einem Seitenteil des Kurvengurtförderers;
- Fig. 3:: eine perspektivische Detailansicht eines Halteelements im Zustand bei wechselbarem Fördergurt;
- Fig. 4:: eine perspektivische Ansicht eines Rollenhalters.

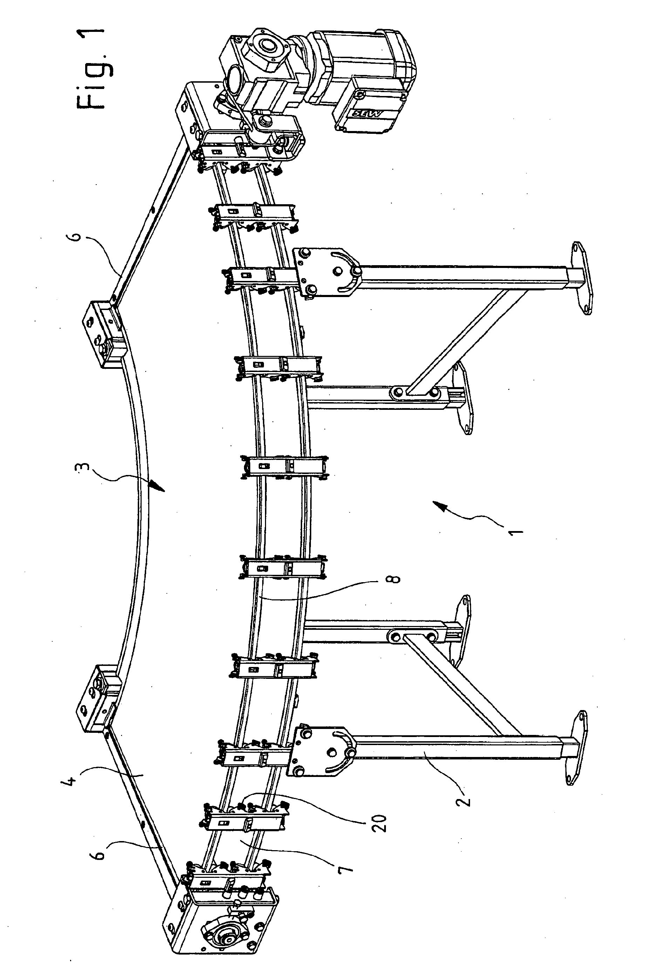

In Fig. 1 ist ein Kurvengurtförderer 1 in perspektivischer Ansicht dargestellt. Diese weist zum einen ein Gestell 2 auf, auf dem ein Fördergurt 3 umläuft, wobei bei dem Fördergurt zwischen der obertrumigen Seite 4 und der untertrumigen Seite 5 unterschieden wird. An den beiden Enden des Kurvengurtförderers sind Umlenkrollen 6 vorgesehen, um die der Fördergurt umläuft. An einem Seitenwandprofil 7 sind Rollen 20 vorgesehen, die ein an der Außenkante des Fördergurtes 3 angeordnetes Angriffselement 8 in Eingriff nehmen und auf diese Weise den Fördergurt 3 führen.

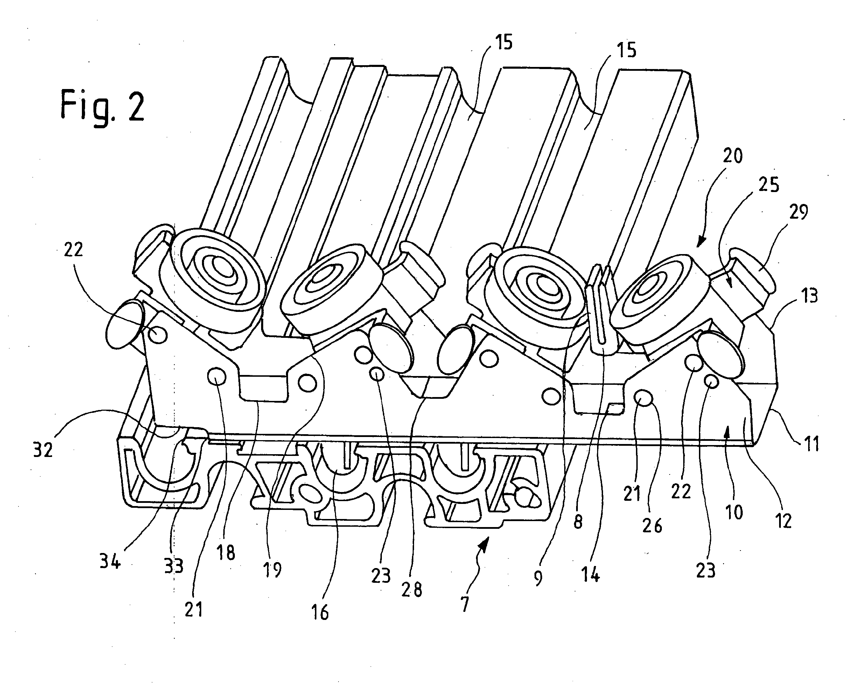

In Fig. 2 ist eine perspektivische Ansicht eines Teils des Seitenwandprofils 7 mit einem Halteelement 10 dargestellt, das an dem Seitenwandprofil befestigt ist, und an dem vier Rollen 20 montiert sind. Das Halteelement 10 ist nach Art eines U-Profils ausgebildet und weist einen Boden 11 oder Bodenabschnitt auf, von dem aus sich rechtwinklig zwei Schenkel 12 und 13 parallel zueinander erstrecken. Im Boden 11 des Halteelements 10, das als U-Profil ausgebildet ist, sind einige Ausnehmungen 14 vorgesehen, durch die eine Verbindung des Halteelements 10 mit dem Seitenwandprofil 7 erfolgt. In dem Seitenwandprofil 7 sind mehrere Nuten 15 vorgesehen, in denen Klemmsteine 16 angeordnet werden können, die mit dem Halteelement 10 durch die Ausnehmungen 14 hindurch verschraubt und festgelegt werden. Das Haltelement 10 ist insgesamt vertikal ausgerichtet, so dass die vier Rollen 20 übereinander angeordnet sind. Zwischen jeweils zwei Rollen, die ein Rollenpaar bilden, ist ein Fördergurt, insbesondere ein Angriffselement 8 des Fördergurts geführt. In der Zeichnung ist das Angriffselement 8 mit damit ausgebildeten Armen 9 dargestellt. Zwischen diese Arme 9 ist der Fördergurt 3 eingelegt und mit den Armen verbunden, beispielsweise durch Verklebung und/oder eine Nahtverbindung. Die Rollen 20 eines Rollenpaars stehen unter einem Winke! zwischen 100 ° und 120 °, insbesondere 110 ° zueinander und beaufschlagen so von beiden Seiten das Angriffselement 8 des Fördergurts 3, der in der Fig. 2 nicht dargestellt ist. Die Rollen 20 sind auf Rollenhaltern 25 gelagert, die ihrerseits in dem Halteelement 10 aufgenommen sind. Die Halteelemente 25 sind an den sich gegenüberliegenden Schenkeln 12, 13 des Halteelements 10 angeordnet, insbesondere an den Innenseiten der Schenkel 12, 13 befestigt. Um den Fördergurt und insbesondere das Angriffselement 8 aus der Position zwischen den Rollen herausnehmen zu können, ist es notwendig, dass mindestens eine Rolle 20 schwenkbar angeordnet ist. Dazu sind in den Schenkeln 12, 13 mehrere Rastausnehmungen 21, 22, 23 vorgesehen. Dabei ist eine Rastausnehmung 21 auf der dem Fördergurt zugewandten Seite der Rolle 20 angeordnet und zwei Rastausnehmungen 22 und 23 sind mit etwas Abstand zueinander auf der vom Fördergurt abgewandten Seite den Schenkeln des U-Profils angeordnet. Der Rollenhalter 25 weist zwei Rastnasen 26 und 27 auf, die zu den Rastausnehmungen korrespondieren und mit diesen Befestigungspunkte ausbilden. Die Rastnase 26 ist fest in der Rastausnehmung 21 arretiert, wobei der Rollenhalter 25 um eine durch die Achse der Rastnase 25 verlaufende Achse schwenkbar ist. Auf der vom Fördergurt abgewandten Seite kann die Rastnase 27 entweder in die Rastausnehmung 22 oder die Rastausnehmung 23 bewegt werden. Bei der in der Figur dargestellten Arretierung der Rastnase 27 in der Rastausnehmung 22 wird der Fördergurt bzw. das Angriffselement 8 des Fördergurts von den Rollen 20 in Eingriff genommen. Wird der Rollenhalter 25 nach unten bewegt, so dass die Rastnase 22 in die Rastausnehmung 23 einklickt, wird dabei die gesamte Rolle 20 nach unten geschwenkt und der Fördergurt wird freigegeben und kann dann zu Wartungszwecken entnommen werden.

Die Veränderung der Position erfolgt über beidseitig an dem Rollenhalter 25 vorgesehene Betätigungshebel 29, die von einem Bediener nach innen gedrückt werden können, so dass dann die Rastnase 27 aus der Rastausnehmung 22 nach innen herausgedrückt wird, verschoben werden kann und dann bei Loslassen des Betätigungshebels 29 in die gewünschte andere Position, also insbesondere die Rastausnehmungen 23 wieder einrastet. Das Halteelement 10, insbesondere die Schenkel 12 und 13 des U-Profils weisen zwischen den paarweise angeordneten Rollen 20 Aussparungen 18 auf, so dass in diesen der Fördergurt verlaufen kann. Zu beiden Seiten der Aussparung 18 sind die oberen Abschnitte 19 der Schenkel 12 und 13 mit einem Winkel von etwa 55 ° angestellt und einander zugeneigt. Dieser obere Abschnitt 19 ist somit parallel zu dem in der Eingriffshaltung angeordneten Rollen 20. Auf dem einstückigen Halteelement 10 sind zwei Rollenpaare angeordnet. Dabei sind zwei Aussparungen 18 in den Schenkeln vorgesehen, die jeweils zwischen zwei Rollen eines Rollenpaares angeordnet sind. Eine zweite Aussparung 28 ist zwischen den beiden Rollenpaaren angeordnet und dient dazu, dass die Rollenhalter 25 und insbesondere die Betätigungshebel 29, die über das Halteelement 10 hinausstehen, nach unten bewegt werden können. Hinzuweisen ist außerdem noch auf eine sich aus der Ausrichtung des Halteelements 10 ergebende Asymmetrie, nämlich die im unterem Endbereich befindliche Aussparung 32, durch die im Bereich des Bodens 11 des Halteelements 10 eine Kante 33 gebildet ist, die gegen eine vorspringenden Absatz 34 des Seitenwandprofils 7 anschlägt. Der Endbereich ist nach unten gerichtet, so dass die auf das Halteelement 10 wirkende Kraft mechanisch noch besser auf dem Seitenwandprofil 7 abgestützt werden kann.

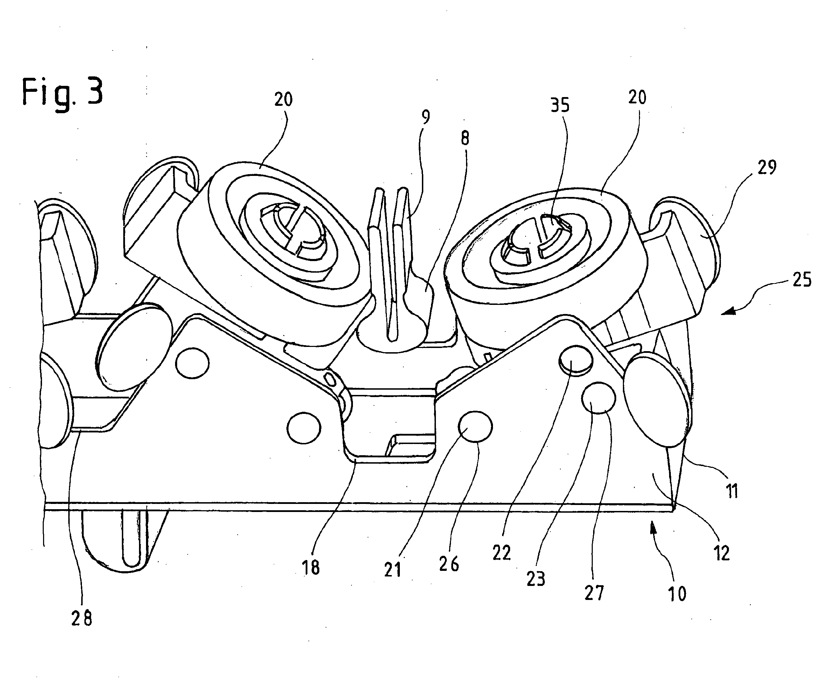

In Fig. 3 ist eine perspektivische Detailansicht des Halteelements 10 dargestellt, wobei die in der Fig. rechte Rolle 20 zwischen die Schenkel 12 und 13 des U-förmigen Profils geschwenkt ist. Dadurch wird der Fördergurt bzw. das an dem Fördergurt angeordnete Angriffselement 8 freigegeben und der Gurt kann herausgenommen werden. Im Unterschied zu Fig. 2 ist hier klar zu erkennen, dass die Rastnase 27 des Rollenhalters 25 jetzt nicht mehr in der Rastausnehmung 22, sondern in Rastausnehmung 23 arretiert ist. Der Rollenhalter 25 ist also nach unten geschenkt und damit ist auch die Rolle 20, die auf der Achse 35 des Rollenhalters 25 dreht, mitgeschwenkt. Die Abstände der Schenkel 12 und 13 zueinander sind so bemessen, dass die Rolle 20 zwischen diese gerade eingeschwenkt werden kann.

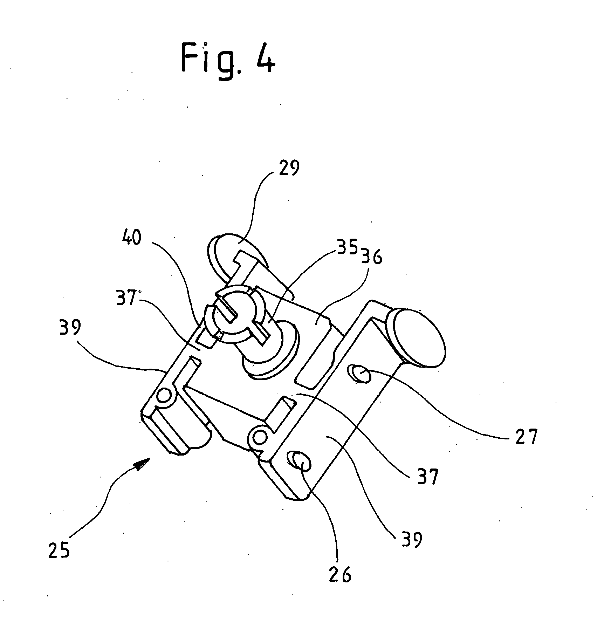

In Fig. 4 ist eine perspektivische Ansicht eines Rollenhalters 25 dargestellt. Bereits beschrieben wurde die auf dem Rollenhalter angeordnete Achse 35 sowie die seitlichen Rastnasen 26 und 27 und der Betätigungshebel 29. Die Achse 35 ist auf einem zentralen und sehr stabilen Mittelblock 36 angeordnet, der über Querverstrebungen 37 mit den beiden äußeren Seitenelementen 39 verbunden ist. An den Seitenelementen 39, die so dimensioniert sind, dass sie innenseitig eng anliegend zwischen die Schenkel 12 und 13 des Halteelements eingepasst sind, sind die Rastnasen 26 und 27 angeformt. Die Seitenelemente 39 sind im vorderen Bereich, also insbesondere zwischen dem Gurt zugewandten Rastnase 26 bis zur Querverstrebung 37 starr ausgebildet. Im hinteren Bereich, also insbesondere zwischen der Querverstrebung 37 und der hinteren Rastnase 27 weisen die Seitenelemente 39 eine Materialschwächung 40 auf, so dass durch Druck auf den Betätigungshebel 39 eine in diesem Bereich definiert erfolgende Biegung der Seitenelemente 39 erfolgt, so dass die Rastnase 27 aus der jeweiligen Rastausnehmung 22 oder 23 bewegt werden kann.

## Patentansprüche

1. Kurvengurtförderer mit einem Fördergurt (3), der im Bereich der den Außenrand bildenden Kante ein Angriffselement (8) aufweist, das von mehreren paarweise angeordneten Rollen (20) geführt wird, wobei jedes Paar der Rollen (20) auf einem Halteelement (10) angeordnet ist,
**dadurch gekennzeichnet,**
**dass** das Haltelement (10) als U-Profil mit einem Boden (11) und zwei Schenkeln (12, 13) ausgebildet ist, und
**dass** die Rollen (20) über zugeordnete Rollenhalter (25) an den sich gegenüberliegenden Schenkeln (12, 13) des U-Profils befestigt sind.

2. Kurvengurtförderer nach Anspruch 1, **dadurch gekennzeichnet, dass** der Rollenhalter (25) an den Innenseiten der sich gegenüberliegenden Schenkel (12, 13) des U-Profils befestigt ist.

3. Kurvengurtförderer nach einem der vorhergehenden Ansprüche, **dadurch gekennzeichnet, dass** die Drehachse (35) mindestens einer Rolle in einer Ebene, die parallel zwischen den Schenkeln (12, 13) des U-Profils liegt, verschwenkbar ist.

4. Kurvengurtförderer nach einem der vorhergehenden Ansprüche, **dadurch gekennzeichnet, dass** mindestens ein Rollenhalter (25) mit jedem Schenkel (12, 13) des U-Profils zwei Befestigungspunkte hat, wobei der Befestigungspunkt (21, 26), der dem Fördergurt (7) zugewandt ist, eine Drehbewegung des Rollenhalters (25) um diesen Befestigungspunkt (21, 26) erlaubt und dass der Befestigungspunkt (22, 23, 27), der vom Fördergurt (7) abgewandt ist, zwischen zwei Positionen veränderbar ist, so dass in einer Position die Rolle (20) am Fördergurt (7) anliegt und in einer anderen Position die Rolle der Fördergurt freigibt.

5. Kurvengurtförderer nach einem der vorhergehenden Ansprüche, **dadurch gekennzeichnet, dass** der Abstand der Schenkel (12, 13) des U-Profils zueinander größer ist als der Durchmesser der Rolle (20).

6. Kurvengurtförderer nach einem der vorhergehenden Ansprüche, **dadurch gekennzeichnet, dass** der Rollenhalter (25) einen Betätigungshebel (29) aufweist, der mechanisch verformbar ist, so dass ein Befestigungspunkt (22, 23,27) des Rollenhalters (25) reversibel lösbar ist.

7. Kurvengurtförderer nach Anspruch 6, **dadurch gekennzeichnet, dass** ein Befestigungspunkt durch korrespondierende Rastelemente am Betätigungshebel des Rollenhalters und dem Schenkel des U-Profils ausgebildet ist.

8. Kurvengurtförderer nach einem der Ansprüche 6 oder 7, **dadurch gekennzeichnet, dass** der Betätigungshebel (28) eine Rastnase (27) aufweist, die innenseitig in einer von mehreren Rastausnehmungen (22, 23) in den Schenkel (12, 13) des U-Profils reversibel fixierbar ist.

9. Kurvengurtförderer nach einem der Ansprüche 4 bis 8, **dadurch gekennzeichnet, dass** der Rollenhalter (25) im Bereich des dem Fördergurt (7) zugewandten Befestigungspunktes und der Aufnahme der Rolle starr ausgebildet ist und dass der Rollenhalter im Bereich des vom Fördergurt abgewandten Befestigungspunktes weniger starr ausgebildet ist.

10. Kurvengurtförderer nach Anspruch 9, **dadurch gekennzeichnet, dass** der Rollenhalter Seitenelemente (39) aufweist, die im Übergangsbereich zum Betätigungshebel (29) eine Materialschwächung (40) aufweisen.

11. Kurvengurtförderer nach einem der vorhergehenden Ansprüche, **dadurch gekennzeichnet, dass** die Schenkel(12, 13) des U-Profils zwischen zwei ein Rollenpaar bilden Rollen (20) eine Ausnehmung (18) aufweisen.

12. Kurvengurtförderer nach einem der vorhergehenden Ansprüche, **dadurch gekennzeichnet, dass** auf einem einstückig ausgebildeten U-Profil vier Rollen angeordnet sind, wobei zwei Rollen ein Rollenpaar für die obertrumige Seite des Fördergurtes bilden und zwei Rollen ein Rollenpaar für die untertrumige Seite des Fördergurtes bilden.

13. Kurvengurtförderer nach Anspruch 12, **dadurch gekennzeichnet, dass** die Schenkel (12, 13) des U-Profils im Bereich zwischen den Rollenpaaren eine Aussparung (28) aufweisen.

14. Halteelement für einen Kurvengurtförderer, auf dem mindestens zwei paarweise angeordnete Rollen angeordnet sind,
**dadurch gekennzeichnet,**
**dass** das Halteelement als U-Profil mit einem Boden und zwei Schenkeln ausgebildet ist, und
**dass** die Rollen (20) über zugeordnete Rollenhalter (25) an den sich gegenüberliegenden Schenkeln (12, 13) des U-Profils befestigt sind.

## Claims

1. A curved belt conveyor with a conveying belt (3) that features an application element (8) in the region of the edge forming the outer periphery, wherein said application element is guided by a plurality of rollers (20) that are arranged in pairs and each pair of rollers (20) is arranged on a retaining element (10),
**characterized in**
**that** the retaining element (10) is realized in the form of a U-shaped profile with a base (11) and two limbs (12, 13), and in
**that** the rollers (20) are fastened on the opposing limbs (12, 13) of the U-shaped profile by means of assigned roller holders (25).

2. The curved belt conveyor according to Claim 1, **characterized in that** the roller holder (25) is fastened on the inner sides of the opposing limbs (12, 13) of the U-shaped profile.

3. The curved belt conveyor according to one of the preceding claims, **characterized in that** the rotational axis (35) of at least one roller can be pivoted in a plane that lies parallel between the limbs (12, 13) of the U-shaped profile.

4. The curved belt conveyor according to one of the preceding claims, **characterized in that** at least one roller holder (25) has two fastening points on each limb (12, 13) of the U-shaped profile, wherein the fastening point (21, 26) that faces the conveying belt (7) allows a rotational motion of the roller holder (25) about this fastening point (21, 26), and wherein the fastening point (22, 23, 27) that faces away from the conveying belt (7) can be changed between two positions such that the roller (20) adjoins the conveying belt (7) in one position and the roller releases the conveying belt in the other position.

5. The curved belt conveyor according to one of the preceding claims, **characterized in that** the clearance between the limbs (12, 13) of the U-shaped profile is greater than the diameter of the roller (20).

6. The curved belt conveyor according to one of the preceding claims, **characterized in that** the roller holder (25) features an actuating lever (29) that can be mechanically deformed such that one fastening point (22, 23, 27) of the roller holder (25) can be reversibly disengaged.

7. The curved belt conveyor according to Claim 6, **characterized in that** a fastening point is realized in the form of corresponding snap-in elements on the actuating lever of the roller holder and the limb of the U-shaped profile.

8. The curved belt conveyor according to one of Claims 6 or 7, **characterized in that** the actuating lever (28) features a snap-in tab (27) that can be reversibly fixed inside one of several snap-in openings (22, 23) in the limbs (12, 13) of the U-shaped profile.

9. The curved belt conveyor according to one of Claims 4 to 8, **characterized in that** the roller holder (25) is realized rigidly in the region of the fastening point that faces the conveying belt (7) and of the receptacle of the roller, and **in that** the roller holder is realized less rigidly in the region of the fastening point that faces away from the conveying belt.

10. The curved belt conveyor according to Claim 9, **characterized in that** the roller holder features lateral elements (39) with a material weakening (40) in the region of the transition to the actuating lever (29).

11. The curved belt conveyor according to one of the preceding claims, **characterized in that** the limbs (12, 13) of the U-shaped profile feature an opening (18) between two rollers (20) that form a pair.

12. The curved belt conveyor according to one of the preceding claims, **characterized in that** four rollers are arranged on a U-shaped profile realized in one piece, wherein two rollers form a pair of rollers for the top run side of the conveying belt and two rollers form a pair of rollers for the bottom run side of the conveying belt.

13. The curved belt conveyor according to Claim 12, **characterized in that** the limbs (12, 13) of the U-shaped profile feature a recess (28) in the region between the pairs of rollers.

14. A retaining element for a curved belt conveyor, on which at least two rollers are arranged in pairs,
**characterized in**
**that** the retaining element is realized in the form of a U-shaped profile with a base and two limbs, and in that the rollers (20), are fastened on the opposing limbs (12, 13) of the U-shaped profile by means of assigned roller holders (25).

## Revendications

1. Convoyeur à bande courbée comprenant une bande de convoyage (3) qui présente un élément d'attaque (8) au niveau de l'arête formant le bord extérieur, qui est dirigé par plusieurs rouleaux (20) disposés par paires, sachant que chaque paire de rouleaux (20) est disposée sur un élément de retenue (10),
**caractérisé en ce que**
l'élément de retenue (10) est formé en tant que profilé en U avec un fond (11) et deux branches (12, 13), et
que les rouleaux (20) sont fixés sur les branches (12, 13) opposées du profilé en U par des fixations de rouleau (25) correspondantes.

2. Convoyeur à bande courbée selon la revendication 1, **caractérisé en ce que** la fixation de rouleau (25) est fixée sur les côtés intérieurs des branches (12, 13) opposées du profilé en U.

3. Convoyeur à bande courbée selon la revendication 1 ou 2, **caractérisé en ce que** l'axe de rotation (35) d'au moins un rouleau peut pivoter dans un plan parallèle entre les branches (12, 13) du profilé en U.

4. Convoyeur à bande courbée selon l'une des revendications précédentes, **caractérisé en ce qu'**au moins une fixation de rouleau (25) a deux points de fixation avec chaque branche (12, 13) du profilé en U, sachant que le point de fixation (21, 26) tourné vers la bande de convoyage (7), permet une rotation de la fixation de rouleau (25) sur ce point de fixation (21, 26) et **en ce que** le point de fixation (22, 23, 27) détourné de la bande de convoyage (7) est modifiable entre deux positions de telle sorte, que dans une position, le rouleau (20) repose sur la bande de convoyage (7) et dans une autre position, le rouleau libère la bande de convoyage.

5. Convoyeur à bande courbée selon l'une des revendications précédentes, **caractérisé en ce que** l'écart entre les branches (12, 13) du profilé en U est supérieur au diamètre du rouleau (20).

6. Convoyeur à bande courbée selon l'une des revendications précédentes, **caractérisé en ce que** la fixation de rouleau (25) présente un levier d'actionnement (29) qui peut être déformé mécaniquement, de sorte qu'un point de fixation (22, 23, 27) de la fixation de rouleau (25) est séparable de façon réversible.

7. Convoyeur à bande courbée selon la revendication 6, **caractérisé en ce qu'**un point de fixation est formé par des éléments d'encliquetage correspondants sur le levier d'actionnement de la fixation de rouleau et la branche du profilé en U.

8. Convoyeur à bande courbée selon la revendication 6 ou 7, **caractérisé en ce que** le levier d'actionnement (28) présente un ergot d'encliquetage (27), qui peut être fixé de façon réversible à l'intérieur de l'un de plusieurs évidements d'encliquetage (22, 23) dans les branches (12, 13) du profilé en U.

9. Convoyeur à bande courbée selon l'une des revendications 4 à 8, **caractérisé en ce que** la fixation de rouleau (25) est rigide au niveau du point de fixation tourné vers la bande de convoyage (7) et de la réception du rouleau, et que la fixation de rouleau est moins rigide au niveau du point de fixation détourné de la bande de convoyage.

10. Convoyeur à bande courbée selon la revendication 9, **caractérisé en ce que** la fixation de rouleau présente des éléments latéraux (39) qui présentent un affaiblissement de matériau (40) dans la transition vers le levier d'actionnement (29).

11. Convoyeur à bande courbée selon l'une des revendications précédentes, **caractérisé en ce que** les branches (12, 13) du profilé en U présentent un évidement (18) entre deux rouleaux (20) formant une paire de rouleaux.

12. Convoyeur à bande courbée selon l'une des revendications précédentes, **caractérisé en ce que** quatre rouleaux sont disposés sur un profilé en U monobloc, sachant que deux rouleaux forment une paire de rouleaux pour le côté du brin supérieur de la bande de convoyage et deux rouleaux forment une paire de rouleaux pour le côté du brin inférieur de la bande de convoyage.

13. Convoyeur à bande courbée selon la revendication 12, **caractérisé en ce que** les branches (12, 13) du profilé en U présentent un évidement (28) dans la partie entre les paires de rouleaux.

14. Élément de retenue pour un convoyeur à bande courbée sur lequel au moins deux rouleaux agencés en paire sont disposés,
**caractérisé en ce que**
l'élément de retenue est formé en tant que profilé en U avec un fond et deux branches, et
que les rouleaux (20) sont fixés sur les branches (12, 13) opposées du profilé en U par des fixations de rouleau (25) correspondantes.
